# EUROPÄISCHE PATENTSCHRIFT

(11) **EP 1 651 694 B1**
(45) Veröffentlichungstag und Bekanntmachung des Hinweises auf die Patenterteilung: **08.06.2011**
(21) Anmeldenummer: 04763147.8
(22) Anmeldetag: 09.07.2004
(51) Int. Cl.: C08G 18/08, C08G 18/71, C08G 18/83

(54) **THERMOPLASTISCHES POLYURETHAN ENTHALTEND SILANGRUPPEN**
THERMOPLASTIC POLYURETHANE CONTAINING SILANE GROUPS
POLYURETHANE THERMOPLASTIQUE CONTENANT DES GROUPES SILANE

(30) Priorität: 25.07.2003 DE 10334265
(43) Veröffentlichungstag der Anmeldung: 03.05.2006
(73) Patentinhaber: BASF SE, 67056 Ludwigshafen (DE)
(72) Erfinder: HENZE, Oliver, Steffen, 39435 Schneidlingen (DE); PETERS, Sabine, 49638 Nortrup (DE); BRAND, Johann-Diedrich, 49448 Lemförde (DE); HACKL, Christa, 49152 Bad Essen (DE); KRÄMER, Markus, 49448 Stemshorn (DE); HILMER, Klaus, 49448 Brockum (DE)
(86) Internationale Anmeldenummer: PCT/EP2004/007568
(87) Internationale Veröffentlichungsnummer: WO 2005/014683

(56) Entgegenhaltungen:
- WO-A-00/39179
- FR-A- 2 794 759

## Beschreibung

Die Erfindung betrifft thermoplastisches Polyurethan, insbesondere Fasern oder Schläuche, insbesondere Druckluftschläuche enthaltend ein Silan-modifiziertes thermoplastisches Polyurethan, wobei man das theroplastische Polyurethan mit Silan umsetzt, das eine Isocyanatgruppe aufweist.

Des weiteren bezieht sich die Erfindung auf vernetztes Polyurethan erhältlich durch Umsetzung des erfindungsgemäßen thermoplastischen Polyurethans mit Wasser. Außerdem betrifft die Erfindung Verfahren zur Herstellung von Silan-modifiziertem, mit Silizium-organischen Verbindungen modifiziertem, d.h. Organosilangruppen aufweisendem thermoplastischem Polyurethan und derart erhältliche vernetzbare TPU, insbesondere Fasern oder Schläuche, insbesondere Druckluftschläuche sowie die entsprechenden, über die Silangruppen, d.h. die Silizium-organischen Gruppen vernetzten Produkte.

Thermoplastische Kunststoffe sind Kunststoffe, die, wenn es in dem für den Werkstoff für Verarbeitung und Anwendung typischen Temperaturbereich wiederholt erwärmt und abgekühlt wird, thermoplastisch bleiben. Unter thermoplastisch wird die Eigenschaft eines Kunststoffes verstanden, in einem für ihn typischen Temperaturbereich wieder-holt in der Wärme zu erweichen und beim Abkühlen zu erhärten und im erweichten Zustand wiederholt durch Fließen als Formteil, Extrudat oder Umformteil zu Halbzeug oder Gegenständen formbar zu sein. Thermoplastische Kunststoffe sind in der Technik weit verbreitet und finden sich in der Form von Fasern, Platten, Folien, Formkörpern, Flaschen, Ummantelungen, Verpackungen usw. Thermoplastisches Polyurethan (nachstehend als TPU bezeichnet) ist ein Elastomer, der in vielen Anwendungen Verwendung findet, z.B. Schuhapplikationen, Folien, Fasern, Skistiefel, Schläuche. Der Vorteil, der sich im Falle des TPUs durch die Möglichkeit der thermoplastischen Verarbeitbarkeit ergibt, ist allerdings im Hinblick auf die im Vergleich mit vernetzten Polymeren geringere Wärmeformbeständigkeit gleichzeitig ein Nachteil dieser Werkstoffe. Es wäre deshalb wünschenswert, die Vorteile der thermoplastischen Verarbeitung mit denen der hervorragenden Wärmeformbeständigkeit vernetzter Polymere zu verbinden.

Aus der US 2002/0169255 und aus der Veröffentlichung: S. Dassin et al in Polymer Engineering and Science, August 2002, Vol. 42, No. 8 wird im Hinblick auf dieses Ziel gelehrt, ein thermoplastisches Polyurethan mit einem Silan zu modifizieren, wobei das Silan mittels eines Vernetzers an das Polyurethan gekoppelt wird. Durch Hydrolyse des Silans wird anschließend, z.B. nach Formgebung eine Vernetzung des ursprünglich thermoplastischen Polyurethans erreicht. Nachteilig an dieser technischen Lehre ist, dass eine Reihe von Einzelschritten erforderlich sind, das vernetzte TPU zu erhalten. So sind ausgehend vom thermoplastischen Polyurethan zwei Umsetzungen, erst mit dem Vernetzter und anschließend mit dem Silan erforderlich. Gemäß

US 2002/0169255 ist der Einsatz des Vernetzers, der das Silan an das TPU anbindet, erforderlich, da ein direkter Einsatz des Silans zu einem Abbau des TPUs führen soll.

FR 2794759 beschreibt die Umsetzung von thermoplastischen Polyurethan mit Diisocyanaten undAminoalkylsilanen.

Aufgabe der vorliegenden Erfindung war es, thermoplastisches Polyurethan, insbesondere Fasern auf der Basis von thermoplastischem Polyurethan, enthaltend Silangruppen zu entwickeln, die über ein einfaches, schnelles und günstiges Herstellverfahren zugänglich sind, über hervorragende Vernetzungseigenschaften verfügen und insbesondere im Einsatz als Fasern ein sehr gutes Eigenschaftsniveau im vernetzten Zustand aufweisen.

Diese Aufgaben konnten durch die eingangs dargestellten thermoplastische Polyurethane bzw. ihre vernetzten Umsetzungsprodukte mit Wasser gelöst werden.

Dazu wird ein Silan, das eine Isocyanatgruppe aufweist, an ein vorgefertigtes TPU angeknüpft. In dieser Schrift sind unter dem Ausdruck "Silan" insbesondere Silizium--organische Verbindungen zu verstehen. D.h., dass in dieser Schrift Silizium-organische Verbindungen auch als Silane bezeichnet werden. Als Silane können übliche Silane eingesetzt werden, die über eine Isocyanatgruppe und mindestens eine, bevorzugt eine bis zehn, besonders bevorzugt eine Silangruppe verfügen. Bevorzugt sind Alkoxysilane. Dabei können die Silane die folgende allgemeine Struktur aufweisen:

OCN-R-Si(R₁)₃₋ₓ(OR1)ₓ

mit den folgenden Bedeutungen für R, R1 und x:
- R:: aliphatischer, araliphatische oder aromatischer organischer gegebenenfalls verzweigtkettiger gegebenenfalls ungesättigter Rest, bevorzugt Kohlenwasser- stoffrest, mit 1 bis 20, bevorzugt 2 bis 10 Kohlenwasserstoffatomen,
- R₁:: Alkylrest mit 1 bis 10, bevorzugt 1 bis 6 Kohlenstoffatomen, bevorzugt Methyl und/oder Ethyl,
- x:: 1, 2 oder 3, bevorzugt 2 oder 3, besonders bevorzugt 3, wobei die drei in dem Silan vorhandenen mit R gekennzeichneten Alkylreste untereinander gleich oder verschieden sein können, bevorzugt gleich sind.

Dies bedeutet, dass die Verbindung, mit der das Silan in das TPU eingebracht wird, direkt in das Polyurethan eingebaut werden kann. Es wird im Gegensatz zu der Lehre nach US 2002/0169255 und der Veröffentlichung: S. Dassin et al in Polymer Engineering and Science, August 2002, Vol. 42, No. 8 nicht mittelbar, über einen cross-linker, an das TPU angebunden, sondern liegt in der TPU-Struktur selbst vor.

Eine weitere Aufgabe bestand darin, ein verbessertes, einfacheres, schnelleres und wirtschaftlicheres Verfahren zur Herstellung vernetzbarer TPU, insbesondere Verfahren zur Herstellung von Silan-modifiziertem, d.h. Silangruppen aufweisendem thermoplastischen Polyurethan zu entwickeln.

Diese Aufgabe konnte dadurch gelöst werden, dass man bei der Herstellung des Silanmodifizierten thermoplastischen Polyurethans Silan einsetzt, das eine Isocyanatgruppe aufweist, bevorzugt ein Silan, das über eine Isocyanatgruppe und mindestens eine, bevorzugt eine bis zehn, besonders bevorzugt eine Silangruppe verfügt, besonders bevorzugt ein Silan der folgenden allgemeinen Formel:

OCN-R-Si(R₁)₃₋ₓ(OR₁)ₓ

mit den folgenden Bedeutungen für R, R1 und x:
- R:: aliphatischer, araliphatische oder aromatischer organischer gegebenenfalls verzweigtkettiger gegebenenfalls ungesättigter Rest, bevorzugt aliphatischer bevorzugt Kohlenwasserstoffrest, mit 1 bis 20, bevorzugt 2 bis 10 Kohlenwas- serstoffatomen,
- R₁:: Alkylrest mit 1 bis 10, bevorzugt 1 bis 6 Kohlenstoffatomen, bevorzugt Methyl und/oder Ethyl,
- x:: 1, 2 oder 3, bevorzugt 2 oder 3, besonders bevorzugt 3, wobei die drei in dem Silan vorhandenen mit R gekennzeichneten Alkylreste untereinander gleich oder verschieden sein können, bevorzugt gleich sind.

Bevorzugt werden als Silizium-organische Verbindungen, die eine Isocyanatgruppe aufweisen, mindestens eine der folgenden Verbindungen eingesetzt: γ-Isocyanatopropyltrimethoxysilan, Isocyanatomethyltrimethoxysilan, γ-Isocyanatopropyltriethoxysilan und/oder Isocyanatomethyltriethoxysilan, besonders bevorzugt γ-Isocyanatopropyltrimethoxysilan und/oder γ-Isocyanatopropyltriethoxysilan.

Alternativ zu dem oben genannten Verfahren kann die Herstellung der erfindungsgemäßen vernetzbaren TPU auch derart erfolgen, dass man thermoplastisches Polyurethan mit Silan umsetzt, das eine Isocyanatgruppe aufweist. Dabei werden die Silane, die ein Isocyanatgruppen aufweisen, an ein fertiges TPU angeknüpft. Dabei kann das TPU bevorzugt in geschmolzenem oder erweichtem besonders bevorzugt geschmolzenem Zustand beispielsweise in einem Extruder mit dem Silan zur Reaktion gebracht werden. Bevorzugt werden die Silangruppen aber bereits bei der Herstellung des TPU in das TPU integriert.

Sofern bereits die Herstellung des TPU in Gegenwart vom Silan erfolgt, beträgt das molare Verhältnis von den Isocyanaten (a) zu den Silanen bevorzugt zwischen 1 : 0,01 und 1 : 0,50.

Werden bereits hergestellte TPU mit den Silanen, die eine Isocyanatgruppe aufweisen, modifiziert, so werden bevorzugt auf 100 g thermoplastisches Polyurethan zwischen 0,001 und 0,2 mol, besonders bevorzugt zwischen 0,01 und 0,2 mol Silan eingesetzt. Thermoplastisches Polyurethan bedeutet, dass es sich bevorzugt um ein thermoplastisches Elastomer auf Polyurethanbasis handelt.

Als thermoplastisches Polyurethan kommen insbesondere TPU in Frage, die eine Shore-Härte von 50A bis 80 D aufweisen. Bevorzugt sind des weiteren:
**●** TPUs mit einem E-Modul von 10 MPa bis 10.000 MPa gemessen nach der DIN EN ISO 527-2 an einem Probenköper vom Typ A nach DIN EN ISO 3167 bei einer Prüfgeschwindigkeit von 1 mm/min. Aus der Anfangssteigung der Spannungs-Dehnungskurve wird der E-Modul als Verhältnis von Spannung und Dehnung berechnet und/oder
● TPUs mit einer Glastemperatur T_{g} gemessen mittels DSC (bei 10K/min) kleiner minus 10°C für Typen bis maximal 64 Shore D Typen bis kleiner minus 40°C für Typen minimal 85 Shore A Typen und/oder
● TPUs mit einer Schlagzähigkeit nach Charpy gemäß DIN 53453 (DIN EN ISO 179) bis minus 60°C ohne Bruch und einer Kerbschlagzähigkeit kleiner minus 40°C bei Typen kleiner 95 Shore A Typen und kleiner minus 20°C bei Typen bis maximal 60 Shore D Typen und/oder
● TPUs mit einer Dichte nach DIN 53479 oder ISO 1183 zwischen 1.05 und 1.30 g/cm³ und/oder
● TPUs mit einer Zugfestigeit größer 40 MPa gemessen nach DIN 53504 oder ISO 37 für nicht weichgemachte TPU-Typen und/oder
● TPUs mit einem Weiterreißwiderstand gemesen nach DIN 53515 oder ISO 34 größer 65 MPa für (nicht weichgemachte) Typen kleiner 95 Shore A Typen und größer 100 MPa für Typen größer 50 Shore D und/oder
● TPUs mit einem Abrieb kleiner 40 mm³ gemessen nach DIN 53516 oder ISO 4649 und/oder
●
● TPUs mit einem Druckverformungsrest bei 70°C gemessen nach DIN 53517 oder ISO 815 zwischen 30 und 70%.

Diese bevorzugten Eigenschaften weist das TPU im unvernetzten Zustand, d.h. ohne Vernetzungen über die Silangruppen auf.

Verfahren zur Herstellung von thermoplastischen Polyurethanen, in dieser Schrift auch als TPU bezeichnet, sind allgemein bekannt. Im allgemeinen werden TPUs durch Umsetzung von (a) Isocyanaten mit (b) gegenüber Isocyanaten reaktiven Verbindungen, üblicherweise mit einem Molekulargewicht (M_{w}) von 500 bis 10000, bevorzugt 500 bis 5000, besonders bevorzugt 800 bis 3000 und (c) Kettenverlängerungsmitteln mit einem Molekulargewicht von 50 bis 499 gegebenenfalls in Gegenwart von (d) Katalysatoren und/oder (e) üblichen Zusatzstoffen hergestellt. Wie bereits eingangs dargestellt, werden erfindungsgemäß bevorzugt zusätzlich die Silane eingesetzt.

Im Folgenden sollen beispielhaft die Ausgangskomponenten und Verfahren zur Herstellung der bevorzugten Polyurethane dargestellt werden. Die bei der Herstellung der Polyurethane üblicherweise verwendeten Komponenten (a), (b), (c) sowie gegebenenfalls (d) und/oder (e) sollen im Folgenden beispielhaft beschrieben werden:
a) Als organische Isocyanate (a) können allgemein bekannte aliphatische, cycloaliphatische, araliphatische und/oder aromatische Isocyanate eingesetzt werden, beispielsweise Tri-, Tetra-, Penta-, Hexa-, Hepta- und/oder Oktamethylendiisocyanat, 2-Methyl-pentamethylen-diisocyanat-1,5, 2-Ethyl-butylen-diisocyanat-1,4, Pentamethylen-diisocyanat-1,5, Butylen-diisocyanat-1,4, 1-Isocyanato-3,3,5-trimethyl-5-isocyanato-methyl-cyclohexan (Isophoron-diisocyanat, IPDI), 1,4- und/oder 1,3-Bis(isocyanatomethyl)cyclohexan (HXDI), 1,4-Cyclohexan-diisocyanat, 1-Methyl-2,4- und/oder -2,6-cyclohexan-di-isocyanat und/oder 4,4'-, 2,4'- und 2,2'-Dicyclohexylmethan-diisocyanat, 2,2'-, 2,4'-und/oder 4,4'-Diphenylmethandiisocyanat (MDI), 1,5-Naphthylendiisocyanat (NDI), 2,4- und/oder 2,6-Toluylendiisocyanat (TDI), Diphenylmethandiisocyanat, 3,3'-Dimethyl-diphenyl-diisocyanat, 1,2-Diphenylethandiisocyanat und/oder Phenylendiisocyanat. Bevorzugt wird 4,4'-MDI verwendet. Um die Isocyanate (a) von den Silanen zu unterscheiden, fallen unter Isocyanate (a) nur solche Isocyanate, die keine Silangruppe aufweisen. Die Isocyanate (a) weisen per Definition somit keine Silangruppe auf.
b) Als gegenüber Isocyanaten reaktive Verbindungen (b) können die allgemein bekannten gegenüber Isocyanaten reaktiven Verbindungen eingesetzt werden, beispielsweise Polyesterole, Polyetherole und/oder Polycarbonatdiole, die üblicherweise auch unter dem Begriff "Polyole" zusammengefasst werden, mit Molekulargewichten zwischen 500 und 8000, bevorzugt 600 bis 6000, insbesondere 800 bis weniger als 3000, und bevorzugt einer mittleren Funktionalität gegenüber Isocyanaten von 1,8 bis 2,3, bevorzugt 1,9 bis 2,2, insbesondere 2. Bevorzugt setzt man Polyetherpolyole ein, beispielsweise solche auf der Basis von allgemein bekannten Startersubstanzen und üblichen Alkylenoxiden, beispielsweise Ethylenoxid, Propylenoxid und/oder Butylenoxid, bevorzugt Polyetherole basierend auf Propylenoxid-1,2 und Ethylenoxid und insbesondere Polyoxytetramethylen-glykole. Die Polyetherole weisen den Vorteil auf, dass sie eine höhere Hydrolysestabilität als Polyesterole besitzen.

Weiterhin können als Polyetherole sogenannte niedrig ungesättigte Polyetherole verwendet werden. Unter niedrig ungesättigten Polyolen werden im Rahmen dieser Erfindung insbesondere Polyetheralkohole mit einem Gehalt an ungesättigten Verbindungen von kleiner als 0,02 meg/g, bevorzugt kleiner als 0,01 meg/g, verstanden.

Derartige Polyetheralkohole werden zumeist durch Anlagerung von Alkylenoxiden, insbesondere Ethylenoxid, Propylenoxid und Mischungen daraus, an die oben beschriebenen Diole oder Triole in Gegenwart von hochaktiven Katalysatoren hergestellt. Derartige hochaktive Katalysatoren sind beispielsweise Cäsiumhydroxid und Multimetallcyanidkatalysatoren, auch als DMC-Katalysatoren bezeichnet. Ein häufig eingesetzter DMC-Katalysator ist das Zinkhexacyanocobaltat. Der DMC-Katalysator kann nach der Umsetzung im Polyetheralkohol belassen werden, üblicherweise wird er entfernt, beispielsweise durch Sedimentation oder Filtration.

Weiterhin können Polybutadiendiole mit einer Molmasse von 500 bis 10000 g/mol bevorzugt 1000 bis 5000 g/mol, insbesondere 2000 bis 3000 g/mol verwendet werden. TPU's welche unter der Verwendung dieser Polyole hergestellt wurden, können nach thermoplastischer Verarbeitung strahlenvernetzt werden. Dies führt z.B. zu einem besseren Abbrennverhalten.

Statt eines Polyols können auch Mischungen verschiedener Polyole eingesetzt werden.
c) Als Kettenverlängerungsmittel (c) werden allgemein bekannte aliphatische, araliphatische, aromatische und/oder cycloaliphatische Verbindungen mit einem Molekulargewicht von 50 bis 499, bevorzugt 2-funktionelle Verbindungen, eingesetzt, beispielsweise Diamine und/oder Alkandiole mit 2 bis 10 C-Atomen im Alkylenrest, insbesondere 1,3-Propandiol, Butandiol-1,4, Hexandiol-1,6 und/oder Di-, Tri-, Tetra-, Penta-, Hexa-, Hepta-, Okta-, Nona- und/oder Dekaalkylenglykole mit 3 bis 8 Kohlenstoffatomen, bevorzugt entsprechende Oligo- und/oder Polypropylenglykole, wobei auch Mischungen der Kettenverlängerer eingesetzt werden können.

Besonders bevorzugt handelt es sich bei den Komponenten a) bis c) um difunktionelle Verbindungen, d.h. Diisocyanate (a), difunktionelle Polyole, bevorzugt Polyetherole (b) und difunktionelle Kettenverlängerungsmittel, bevorzugt Diole.
d) Geeignete Katalysatoren, welche insbesondere die Reaktion zwischen den NCO-Gruppen der Diisocyanate (a) und den Hydroxylgruppen der Aufbaukomponenten (b) und (c) beschleunigen, sind die nach dem Stand der Technik bekannten und üblichen tertiären Amine, wie z.B. Triethylamin, Dimethylcyclohexylamin, N-Methylmorpholin, N,N'-Dimethylpiperazin, 2-(Dimethylamino-ethoxy)-ethanol, Diazabicyclo-(2,2,2)-octan und ähnliche sowie insbesondere organische Metallverbindungen wie Titansäureester, Eisenverbindungen wie z.B. Eisen-(III)- acetylacetonat, Zinnverbindungen, z.B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Die Katalysatoren werden üblicherweise in Mengen von 0,0001 bis 0,1 Gew.-Teilen pro 100 Gew.-Teile Polyhydroxylverbindung (b) eingesetzt.
e) Neben Katalysatoren (d) können den Aufbaukomponenten (a) bis (c) auch übliche Hilfsmittel und/oder Zusatzstoffe (e) hinzugefügt werden. Genannt seien beispielsweise Treibmittel, oberflächenaktive Substanzen, Füllstoffe, Keimbildungsmittel, Gleit- und Entformungshilfen, Farbstoffe und Pigmente, Antioxidantien, z.B. gegen Hydrolyse, Licht, Hitze oder Verfärbung, anorganische und/oder organische Füllstoffe, Flammschutzmittel, Verstärkungsmittel und Weichmacher, Metalldeaktivatoren. In einer bevorzugten Ausführungsform fallen unter die Komponente (e) auch Hydrolyseschutzmittel wie beispielsweise polymere und niedermotekutare Carbodiimide. Besonders bevorzugt enthält das thermoplastische Polyurethan in den erfindungsgemäßen Materialien Melamincyanurat, das als Flammschutzmittel wirkt. Bevorzugt wird Melamincyanurat in einer Menge zwischen 0,1 und 60 Gew.-%, besonders bevorzugt zwischen 5 und 40 Gew.-%, insbesondere zwischen 15 und 25 Gew.-% eingesetzt, jeweils bezogen auf das Gesamtgewicht des TPU. Bevorzugt enthält das thermoplastische Polyurethan Triazol und/oder Triazolderivat und Antioxidantien in einer Menge von 0,1 bis 5 Gew.-% bezogen auf das Gesamtgewicht des thermoplastischen Polyurethans. Als Antioxidantien sind im allgemeinen Stoffe geeignet, welche unerwünschte oxidative Prozesse im zu schützenden Kunststoff hemmen oder verhindern. Im allgemeinen sind Antioxidantien kommerziell erhältlich. Beispiele für Antioxidantien sind sterisch gehinderte Phenole, aromatische Amine, Thiosynergisten, Organophosphorverbindungen des trivalenten Phosphors, und Hindered Amine Light Stabilizers. Beispiele für Sterisch gehinderte Phenole finden sich in Plastics Additive Handbook, 5th edition, H. Zweifel, ed, Hanser Publishers, München, 2001 ([1]), S.98-107 und S.116-121. Beispiele für Aromatische Amine finden sich in [1] S.107-108. Beispiele für Thiosynergisten sind gegeben in [1], S.104-105 und S.112-113. Beispiele für Phosphite finden sich in [1], S.109-112.Beispiele für Hindered Amine Light Stabilizer sind gegeben in [1], S.123-136. Zur Verwendung im erfindungsgemäßem Antioxidantiengemisch eignen sich bevorzugt phenolische Antioxidantien. In einer bevorzugten Ausführungsform weisen die Antioxidantien, insbesondere die phenolischen Antioxidantien, eine Molmasse von größer 350 g/mol, besonders bevorzugt von größer 700g/mol und einer maximalen Molmasse < 10000 g/mol bevorzugt < 3000 g/mol auf. Ferner besitzen sie bevorzugt einen Schmelzpunkt von kleiner 180°C. Allgemein kommen alle üblichen amorphen oder flüssigen Stabilisatoren in Frage. Weiterhin werden bevorzugt Antioxidantien verwendet, die amorph oder flüssig sind. Ebenfalls können als Komponente (i) auch Gemische von zwei oder mehr Antioxidantien verwendet werden.

Neben den genannten Komponenten a), b) und c) und gegebenenfalls d) und e) können auch Kettenregler, üblicherweise mit einem Molekulargewicht von 31 bis 3000, eingesetzt werden. Solche Kettenregler sind Verbindungen, die lediglich eine gegenüber Isocyanaten reaktive funktionelle Gruppe aufweisen, wie z. B. monofunktionelle Alkohole, monofunktionelle Amine und/oder monofunktionelle Polyole. Durch solche Kettenregler kann ein Fließverhalten, insbesondere bei TPUs, gezielt eingestellt werden. Kettenregler können im allgemeinen in einer Menge von 0 bis 5, bevorzugt 0,1 bis 1 Gew.-Teile, bezogen auf 100 Gew.-Teile der Komponente b) eingesetzt werden und fallen definitionsgemäß unter die Komponente (c).

Alle in dieser Schrift genannten Molekulargewichte weisen die Einheit [g/mol] auf.

Zur Einstellung von Härte der TPUs können die Aufbaukomponenten (b) und (c) in relativ breiten molaren Verhältnissen variiert werden. Bewährt haben sich molare Verhältnisse von Komponente (b) zu insgesamt einzusetzenden Kettenverlängerungsmitteln (c) von 10 : 1 bis 1 : 10, insbesondere von 1 : 1 bis 1 : 4, wobei die Härte der TPU mit zunehmendem Gehalt an (c) ansteigt.

Die Herstellung der TPU kann nach den bekannten Verfahren kontinuierlich, beispielsweise mit Reaktionsextrudern oder dem Bandverfahren nach One-shot oder dem Prepolymerverfahren, oder diskontinuierlich nach dem bekannten Prepolymerprozess erfolgen. Bei diesen Verfahren können die zur Reaktion kommenden Komponenten (a), (b), (c) und gegebenenfalls (d) und/oder (e) nacheinander oder gleichzeitig miteinander vermischt werden, wobei die Reaktion unmittelbar einsetzt.

Beim Extruderverfahren werden die Aufbaukomponenten (a), (b), (c) sowie gegebenenfalls (d) und/oder (e) einzeln oder als Gemisch in den Extruder eingeführt, z.B. bei Temperaturen von 100 bis 280°C, vorzugsweise 140 bis 250°C, und zur Reaktion gebracht. Das erhaltene TPU wird üblicherweise extrudiert, abgekühlt und granuliert. Nach der Synthese kann es das TPU gegebenenfalls durch Konfektionierung auf einem Extruder modifiziert werden. Durch diese Konfektionierung kann das TPU z.B. in seinem Schmelzindex oder seiner Granulatform entsprechend den Anforderungen modifiziert werden.

Die Verarbeitung der erfindungsgemäß hergestellten TPUs, die üblicherweise als Granulat oder in Pulverform vorliegen, zu Spritzguss- und Extrusionsartikeln, z.B. den gewünschten Folien, Formteilen, Rollen, Fasern, Verkleidungen in Automobilen, Schläuchen, Kabelsteckern, Faltenbälgen, Schleppkabeln, Kabelummantelungen, Dichtungen, Riemen oder Dämpfungselementen erfolgt nach üblichen Verfahren, wie z.B. Spritzguss oder Extrusion. Derartige Spritzguss und Extrusionsartikel können auch aus Compounds, enthaltend das erfindungsgemäße TPU und mindestens einen weiteren thermoplastischen Kunststoff, besonders ein Polyethylen, Polypropylen, Polyester, Polyether, Polystyrol, PVC, ABS, ASA, SAN, Polyacrylnitril, EVA, PBT, PET, Polyoxymethylen, bestehen. Insbesondere lässt sich das erfindungsgemäß hergestellte TPU zur Herstellung der eingangs dargestellten Artikel verwenden. Auch eine Verarbeitung nach dem bekannten powder-slush-Verfahren oder mittels Kalendar kommt in Frage.

Bevorzugt wird man das Silan-modifizierte thermoplastische Polyurethan nach allgemein bekannten Verfahren zu Fasern verspinnen oder zu Schläuchen, insbesondere Druckluftschläuchen extrudieren und anschließend das thermoplastische Polyurethan über die Silangruppen mittels Feuchtigkeit vernetzen, wobei gegebenenfalls ein Katalysator, der die Vernetzung beschleunigt, eingesetzt wird. Die Vernetzungsreaktionen über und durch die Silangruppen sind dem Fachmann geläufig und allgemein bekannt. Diese Vernetzung erfolgt üblicherweise durch Feuchtigkeit und kann durch Wärme oder für diesen Zweck bekannte Katalysatoren, z.B. Lewissäuren, Lewisbasen, Brönstedbasen, Brönstedsäuren beschleunigt werden. Bevorzugt setzt man als Katalysator für die Vernetzung bevorzugt mittels Feuchtigkeit Essigsäure, organische Metallverbindungen wie Titansäureester, Eisenverbindungen wie z.B. Eisen-(III)-acetylacetonat, Zinnverbindungen, z.B. Zinndiacetat, Zinndioctoat, Zinndilaurat oder die Zinndialkylsalze aliphatischer Carbonsäuren wie Dibutylzinndiacetat, Dibutylzinndilaurat ein. Besonders bevorzugt sind Zinndilaureat und/oder Essigsäure.

Das über die Silangruppen vernetzte Produkt, insbesondere Fasern auf der Basis von thermoplastischem Polyurethan, das über Silangruppen vernetzt ist, weisen bevorzugt folgende Vorteile auf:

Ein wichtiges Maß für die Qualität einer Elastomerfaser ist die Wärmeformbeständigkeit. Es wurde überraschender Weise gefunden, dass die Wärmeformbeständigkeit der schmelzgesponnenen Faser, die über Silan-Gruppen vernetzt wurden, signifikant verbessert wurde. So zeigt eine Faser ohne erfindungsgemäße Silanvernetzung eine HDT (Heat distortion temperature, Messung unter einer Vorspannung von 0,04 mN/dtex; Aufheizrate 10K/min; Messbereich von -100°C bis 250°C) von 120°C. Durch die Vernetzung durch die Silan-Gruppen konnte die HDT auf 173°C erhöht werden.

Bevorzugt sind erfindungsgemäß somit Fasern auf der Basis der vernetzten erfindungsgemäßen TPU, die eine Heat distortion temperature bei Messung unter einer Vorspannung von 0,04 mN/dtex, einer Aufheizrate 10K/min und einem Messbereich von -100°C bis 250°C von größer 140°C, bevorzugt größer 160°C, besonders bevorzugt größer 170°C, insbesondere zwischen 171°C und 260°C aufweisen.

Ein weiterer Vorteil der erfindungsgemäßen Vernetzung von schmelzgesponnen Elastomerfasern, besteht in der verbesserten der Beständigkeit gegenüber üblichen Spinnpräparationen. Während hier schmelzgesponnene Fasern ohne erfindungsgemäße Vernetzung im Kontakt mit Spinnpräparationen schon bei niedrigen Temperaturen (<120°C) angegriffen und zum Teil völlig zerstört werden, zeigen erfindungsgemäße vernetzte Fasern auch bei Temperaturen oberhalb von 190°C nahezu keine Schädigungen.

Die folgenden Beispiele sollen die vorliegende Erfindung verdeutlichen.

### Beispiel 1: Zugabe der Silanverbindung zum TPU

Elastollan® E 1195 A, ein TPU der Elastogran GmbH, wurde in einen Zweiwellenmischer gegeben und bei 210°C für 3 Minuten geknetet. Dann wurden 5 bis 10 Gewichtsprozent von γ-Isocyanatopropyltrimethoxysilan zugegeben und noch weitere 6 Minuten bei 210°C geknetet. Die Schmelze wurde abgekühlt.

### Beispiel 2: Zugabe der Silanverbindung zum TPU

Zu Elastollan® E 1195 A, einem TPU der Elastogran GmbH, wurden 2 und 4 Gewichtsprozent von γ-Isocyanatopropyltrimethoxysilan während der Verarbeitung an einem Extruder zugegeben.

### Beispiel 3: Herstellung des TPU mit Silan

Bei der Herstellung von Elastollan® E 1195 A im Handgussverfahren wurde γ-Isocyanatopropyltrimethoxysilan (5 und 10 Gewichtsprozent bezogen auf die Gesamtpolymermasse) in das MDI eingemischt. Die erhaltene Schwarte wird zu Spritzplatten verarbeitet.

### Beispiel 4: Herstellung des TPU mit Silan

Bei der Herstellung von Elastollan® E 1195 A im Handgussverfahren wurde γ-Isocyanatopropyltrimethoxysilan (5 und 10 Gewichtsprozent bezogen auf die Gesamtpolymermasse) in das MDI eingemischt. Außerdem wurde Zinndioctoat (5 und 10 ppm) bei der Herstellung zugegeben. Die erhaltene Schwarte wird zu Spritzplatten verarbeitet.

### Beispiel 5: Herstellung des TPU mit Silan

Bei der Herstellung von Elastollan® C 78 A im Handgussverfahren wurde γ-Isocyanatopropyltriethoxysilan (5 und 10 Gewichtsprozent bezogen auf die Gesamtpolymermasse) in das MDI eingemischt. Außerdem wurde Zinndioctoat (5 und 10 ppm) bei der Herstellung zugegeben. Die erhaltene Schwarte wird zu Spritzplatten verarbeitet.

### Beispiel 6: Herstellung eines TPU enthaltend SDO (Zinndioctoat)

Elastollan® E 1195 A, ein TPU der Elastogran GmbH, wurde in einen Zweiwellenmischer gegeben und bei 210°C für 3 Minuten geknetet. Dann wurde 1 Gewichtsprozent SDO zugegeben und noch weitere 6 Minuten bei 210°C geknetet. Die Schmelze wurde abgekühlt.

### Beispiel 7: Herstellung eins TPU enthaltend SDO (Zinndioctoat)

Elastollan® C 78 A, ein TPU der Elastogran GmbH, wurde in einen Zweiwellenmischer gegeben und bei 210°C für 3 Minuten geknetet. Dann wurde 1 Gewichtsprozent von SDO zugegeben und noch weitere 6 Minuten bei 210°C geknetet. Die Schmelze wurde abgekühlt.

### Beispiel 8: Herstellung des TPU mit Silan

Bei der Herstellung von Elastollan® E 1195 A im Handgussverfahren wurde γ-Isocyanatopropyltrimethoxysilan (5 und 10 Gewichtsprozent bezogen auf die Gesamtpolymermasse) in das MDI eingemischt. Die erhaltene Schwarte wird zerkleinert und unter Zugabe von 2-5% des in Bsp. 6 erhaltenen Materials konfektioniert. Das erhaltene Material wird zu Spritzplatten verarbeitet.

### Beispiel 9: Herstellung des TPU mit Silan

Bei der Herstellung von Elastollan® C 78 A im Handgussverfahren wurde γ-Isocyanatopropyltriethoxysilan (5 und 10 Gewichtsprozent bezogen auf die Gesamtpolymermasse) in das MDI eingemischt. Die erhaltene Schwarte wird zerkleinert und unter Zugabe von 2-5% des in Bsp. 7 erhaltenen Materials konfektioniert. Das erhaltene Material wird zu Spritzplatten verarbeitet.

Die in den Beispielen 1 ,2 und 3 erhaltenen Materialien wurden für 8-48 Stunden bei 80°C in einer sauren Lösung (pH 4 bis 5) gelagert. Danach waren mehr als 70 % des Materials in DMF unlöslich, eine Vernetzung hatte somit stattgefunden. Die Materialien 4, 5, 6 und 7 wurden 8-48 Stunden bei 80°C in Wasser gelagert. Dannach waren mehr als 80% des Materials in DMF unlöslich, eine Vernetzung hatte somit stattgefunden.

### Beispiel 10: Physikalische Eigenschaften

**Tabelle 1: Proben gemäß Beispiel 3, Spannungs-Dehnungs-Werte bei Raumtemperatur und bei 120°C**

| Gehalt an γ-Isocyanatopropyltrimethoxysilan | Prüftemperatur | Sigma 5 in MPa | Sigma 10 in MPa | Sigma 20 in MPa | Sigma 50 in MPa |
|---|---|---|---|---|---|
| 0 % | RT | 2,2 | 3,5 | 5,4 | 8,2 |
| 5 % | RT | 3,4 | 5,4 | 7,5 | 10 |
| 0 % | 120°C | 1,1 | 1,6 | 2,2 | 3,1 |
| 5 % | 120°C | 2,1 | 3 | 3,8 | 4,5 |

Das vernetzte TPU zeigte ein höheres Niveau im Spannungs/Dehnungs Verhalten.

**Tabelle 2: Proben gemäß Beispiel 3, Vicat-Temperatur und E-Modul**

| | Prüfung an Spritzgussartikel | | |
|---|---|---|---|
| γ-Isocyanatopropyltrimethoxysilan | Härte | E-Modul | Vicat DIN ENISO 306 (10 N /120K/h) |
| | | | |

| [Gew.%] | [Shore A] | [MPa] | [°C] |
|---|---|---|---|
| | | | |
| 0 | 91 | 38 | 116 |
| 5 | 94 | 68 | 147 |
| 10 | 94 | 58 | 142 |

Das vernetzte TPU zeigt höhere Shore A Härte Werte, höhere E-Modul Werte und eine höhere Vicat Temperatur.

Die Proben gemäß Bsp. 3 wurden einem Hot Set Test unterzogen (an EN 60811-2-1 angelehnt). Die Proben wurden bei 1 cm² Querschnitt bei 180°C jeweils mit verschiedenen Gewichten belastet.

| γ-Isocyanatopropyltrimethoxysilan | **180°C/100 g** | | **180°C/200 g** | | **180°C/300 g** | | **180°C/400 g** | |
|---|---|---|---|---|---|---|---|---|
| % | 1.Messung | 2.Messung | 1.Messung | 2.Messung | 1.Messung | 2.Messung | 1.Messung | 2.Messung |
| | % | % | % | % | % | % | % | % |
| **0** | abgerissen | | abgerissen | | abgerissen | | abgerissen | |
| **5** | 15 | 0 | 20 | 10 | 20 | 10 | 30 | 10 |

Aus den TPU's mit 5 % γ-Isocyanatopropyltrimethoxysilan schmelzgesponnene Fasern weisen folgende Eigenschaften auf: eine HDT (Heat distortion temperature, Messung unter einer Vorspannung von 0,04 mN/dtex; Aufheizrate 10 K/min; Messbereich von 100°C bis 250°C) von 173°C.

## Patentansprüche

1. Verfahren zur Herstellung von Silan-modifiziertem thermoplastischem Polyurethan, **dadurch gekennzeichnet, dass** man thermoplastisches Polyurethan mit Silan umsetzt, das eine Isocyanatgruppe aufweist.

2. Verfahren gemäß Anspruch 1, **dadurch gekennzeichnet, dass** man als Silan mindestens eine der folgenden Verbindungen einsetzt: γ-Isocyanatopropyltrimethoxysilan, Isocyanatomethyltrimethoxysilan, γ-Isocyanatopropyltriethoxysilan und/oder Isocyanatomethyltriethoxysilan.

3. Verfahren gemäß Anspruch 1, **dadurch gekennzeichnet, dass** auf 100 g thermoplastisches Polyurethan zwischen 0,001 und 0,20 mol Silan eingesetzt werden.

4. Verfahren gemäß Anspruch 1, **dadurch gekennzeichnet, dass** man das Silan-modifizierte thermoplastische Polyurethan zu Fasern verspinnt oder zu Schläuchen extrudiert und anschließend das thermoplastische Polyurethan über die Silangruppen mittels Feuchtigkeit vernetzt.

5. Verfahren gemäß Anspruch 4, **dadurch gekennzeichnet, dass** man als Katalysator für die Vernetzung mittels Feuchtigkeit Lewissäuren, Lewisbasen, Brönstedbasen, Brönstedsäuren einsetzt.

6. Polyurethan erhältlich durch ein Verfahren gemäß einem der Ansprüche 1 bis 5.

7. Faser auf der Basis von thermoplastischem Polyurethan erhältlich gemäß einem der Ansprüche 1 bis 5.

8. Schläuche auf der Basis von thermoplastischem Polyurethan erhältlich gemäß einem der Ansprüche 1 bis 5.

9. Kabelummantelungen auf der Basis von thermoplastischem Polyurethan erhältlich gemäß einem der Ansprüche 1 bis 5.

10. Verwendung der nach einem Verfahren gemäß einem der Ansprüche 1 bis 3 erhältlichen thermoplastisch verarbeitbaren Polyurethanelastomere für Extrusions-, Spritzguss-, Kalenderartikel sowie für Powder-slush-Verfahren.

## Claims

1. A process for preparing silane-modified thermoplastic polyurethane, wherein thermoplastic polyurethane is reacted with silane which has an isocyanate group.

2. The process according to claim 1, wherein the silane used comprises at least one of the following compounds: γ-isocyanatopropyltrimethoxysilane, isocyanatomethyltrimethoxysilane, γ-isocyanatopropyltriethoxysilane, and/or isocyanatomethyltriethoxysilane.

3. The process according to claim 1, wherein from 0.001 to 0.20 mol of silane is used for each 100 g of thermoplastic polyurethane.

4. The process according to claim 1, wherein the silane-modified thermoplastic polyurethane is spun to give fibers, or is extruded to give hoses, and then the thermoplastic polyurethane is crosslinked by way of the silane groups by means of moisture.

5. The process according to claim 4, wherein the catalyst used for the crosslinking by means of moisture comprises Lewis acids, Lewis bases, Brönsted bases, Brönsted acids.

6. A polyurethane obtainable via a process according to any of claims 1 to 5.

7. A fiber based on thermoplastic polyurethane obtainable according to any of claims 1 to 5.

8. A hose based on thermoplastic polyurethane obtainable according to any of claims 1 to 5.

9. A cable sheathing based on thermoplastic polyurethane obtainable according to any of claims 1 to 5.

10. The use of the thermoplastically processible polyurethane elastomers obtainable via a process according to any of claims 1 to 5 for extrusion products, injection-molded products, calendered products, or else for powder-slush processes.

## Revendications

1. Procédé pour la préparation de polyuréthane thermoplastique modifié par silane, **caractérisé en ce qu'**on transforme le polyuréthane thermoplastique avec un silane qui présente un groupe isocyanate.

2. Procédé selon la revendication 1, **caractérisé en ce qu'**on utilise comme silane au moins un des composés suivants : γ-isocyanatopropyltriméthoxysilane, isocyanatométhyltriméthoxysilane, γ-isocyanatopropyltriéthoxysilane et/ou isocyanatométhyltriéthoxysilane.

3. Procédé selon la revendication 1, **caractérisé en ce qu'**on utilise entre 0,001 et 0,20 mole de silane pour 100 g de polyuréthane thermoplastique.

4. Procédé selon la revendication 1, **caractérisé en ce qu'**on file le polyuréthane thermoplastique modifié par silane en fibres ou on l'extrude en tuyaux souples, puis on réticule le polyuréthane thermoplastique via les groupes silane au moyen d'humidité.

5. Procédé selon la revendication 4, **caractérisé en ce qu'**on utilise comme catalyseur pour la réticulation au moyen d'humidité des acides de Lewis, des bases de Lewis, des bases de Brönsted, des acides de Brönsted.

6. Polyuréthane, pouvant être obtenu par un procédé selon l'une quelconque des revendications 1 à 5.

7. Fibres à base de polyuréthane thermoplastique, pouvant être obtenu selon l'une quelconque des revendications 1 à 5.

8. Tuyaux souples à base de polyuréthane thermoplastique, pouvant être obtenu selon l'une quelconque des revendications 1 à 5.

9. Gaines pour câble à base de polyuréthane thermoplastique, pouvant être obtenu selon l'une quelconque des revendications 1 à 5.

10. Utilisation des élastomères de polyuréthane transformables de manière thermoplastique pouvant être obtenus selon un procédé selon l'une quelconque des revendications 1 à 3 pour des objets extrudés, moulés par injection, calandrés ainsi pour des procédés de moulage par embouage de poudres ("Powder Slush").
